# EUROPEAN PATENT SPECIFICATION

(11) **EP 1 650 674 B1**
(45) Date of publication and mention of the grant of the patent: **20.02.2008**
(21) Application number: 04256533.3
(22) Date of filing: 22.10.2004
(51) Int. Cl.: G06F 17/30

(54) **System and method for integrating continuous synchronization on a host handheld device**
Einrichtung und Verfahren zum Integrieren kontinuierlicher Synchronisation an tragbaren Endgeräten
Système et méthode pour l'intégration de synchronisation continue aux dispositifs portables

(43) Date of publication of application: 26.04.2006
(73) Proprietor: Research In Motion Limited, Waterloo, Ontario N2L 3W8 (CA)
(72) Inventor: AGRAWAL, Anish Kumar, Ontario, N2H 6S5 (CA); Rybak, Michal A., Ontario N2R 1B1 (CA)
(74) Representative: Roberts, Gwilym Vaughan

(56) References cited:
- WO-A-02/23330
- US-A- 6 125 369
- US-A1- 2004 010 523
- US-A1- 2004 024 795

## Description

### TECHNICAL FIELD OF THE APPLICATION

The present application relates, in general, to the integration of a client into a host handheld device and, in particular, to a system and method for integrating a continuous synchronization client on a host handheld device which identifies changes in a host database (58) within the host handheld device and updates a client database in response to the identified changes.

### BACKGROUND

Many handheld devices may be synchronized with a desktop computer, that is, information is transferred between the desktop computer and the handheld device to update each. This process typically occurs by coupling the handheld device to the desktop computer via a wired connection and executing synchronization software. Some of these handheld devices may also be capable of wireless synchronization with the desktop computer by establishing wireless communication therebetween and executing the synchronization software. It has been found, however, that these handheld devices are not capable of continuous synchronization to update the information stored on the desktop computer when changes are made to the information stored on the handheld device. Therefore, a need has arisen for a system and method for implementing continuous synchronization from the handheld device to the desktop computer.

US 6,125,369 describes a system for synchronizing object instances between first and second object stores. The system includes a primary computer and a portable computer that is connectable with the primary computer for data communication. A first object store manager executes on the portable computer to maintain the first object store, and a second object store manager executes on the primary computer to maintain the second object store. A synchronization manager executes on the primary computer.

### SUMMARY

In one aspect of the subject invention, there is provided a method for updating a client database within a host handheld device to enable continuous synchronization between the host handheld device and a desktop computer via a wireless communication network, the host handheld device having a host database, a client database for storing a mirror image or an enhanced mirror image of the contents of the host database, a notification handler, a multilayer transport stack, a first API and a second API resident thereon. The method includes steps of: establishing a wireless connection between the host handheld device and the desktop computer via the wireless communication network and the multilayer transport stack, the stack being operable to provide a continuous connection; sending, via the notification handler, a request for notification of a change in the host database to a first API; receiving, via the notification handler, the notification of the change in the host database after the change has occurred in the host database; requesting, via the notification handler, contents of the host database from a second API; requesting, via the notification handler, contents from a client database; comparing, via the notification handler, the contents of the host database and the contents of the client database; identifying, via the notification handler, the change in the host database; updating, via the notification handler, the client database based upon the change in the host database; and, communicating with the desktop computer, via the continuous wireless connection, to update a database of the desktop computer based upon the updated client database.

In a second aspect of the subject invention, there is provided a network system that includes: a desktop computer having a database; a wireless communication network communicably linked to the desktop computer, a handheld device communicably linked to the wireless network. The handheld device includes a host database having first and second API associated therewith, a client database for storing a mirror image or an enhanced mirror image of the contents of the host database, a notification handler, and a multilayer transport stack. The wireless communication network and the multilayer transport stack are arranged to establish a wireless connection between the host handheld device and the desktop computer, the stack being operable to provide a continuous connection. The notification handler is arranged to: send a request for notification of a change in the host database to the first API, receive the notification of the change in the host database after the change has occurred in the host database, request contents of the host database from the second API, request contents from the client database, compare the contents of the host database and the contents of the client database, identify the change in the host database, and send a command to update the client database based upon the change in the host database. The handheld device is arranged to communicate with the desktop computer via the wireless communication network to update the desktop computer database based upon the updated client database.

In a third aspect of the subject invention, there is provided a handheld device that includes: a host database having first and second API associated therewith; a client database for storing a mirror image or an enhanced mirror image of the contents of the host database; a multilayer transport stack arranged with a wireless network to establish a wireless connection between the host handheld device and a desktop computer, the stack being operable to provide a continuous connection; and, a notification handler, wherein the notification handler is arranged to send a request for notification of a change in the host database to the first API, receive the notification of the change in the host database after the change has occurred in the host database, request contents of the host database from the second API, request contents from the client database, compare the contents of the host database and the contents of the client database, identify the change in the host database, send a command to update the client database based upon the change in the host database, and communicate with the desktop computer via the wireless communication network to update a database of the desktop computer based upon the updated client database.

Other features of the subject invention are set out in the dependent claims.

### BRIEF DESCRIPTION OF THE DRAWINGS

For a more complete understanding of the features and advantages of the present systems and methods, reference is now made to the detailed description along with the accompanying figures in which corresponding numerals in the different figures refer to corresponding parts and in which:

Figure 1 depicts an exemplary network environment including a host handheld device wherein an embodiment of the present application may be practiced;

Figure 2 depicts an exemplary software architecture of a host handheld device within a wireless communication environment wherein an embodiment of the present patent application may be practiced;

Figure 3 is a flowchart of an embodiment of integrating a continuous synchronization client on a host handheld device; and

Figure 4 is a flowchart of another embodiment of integrating a continuous synchronization client on a host handheld device.

### DETAILED DESCRIPTION

While the operation of various embodiments of a handheld device is discussed in detail below, it should be appreciated that the present application provides many applicable inventive concepts which can be embodied in a wide variety of specific contexts. The specific embodiments discussed herein are merely illustrative of specific ways to use the handheld device, and do not delimit the scope of the present application.

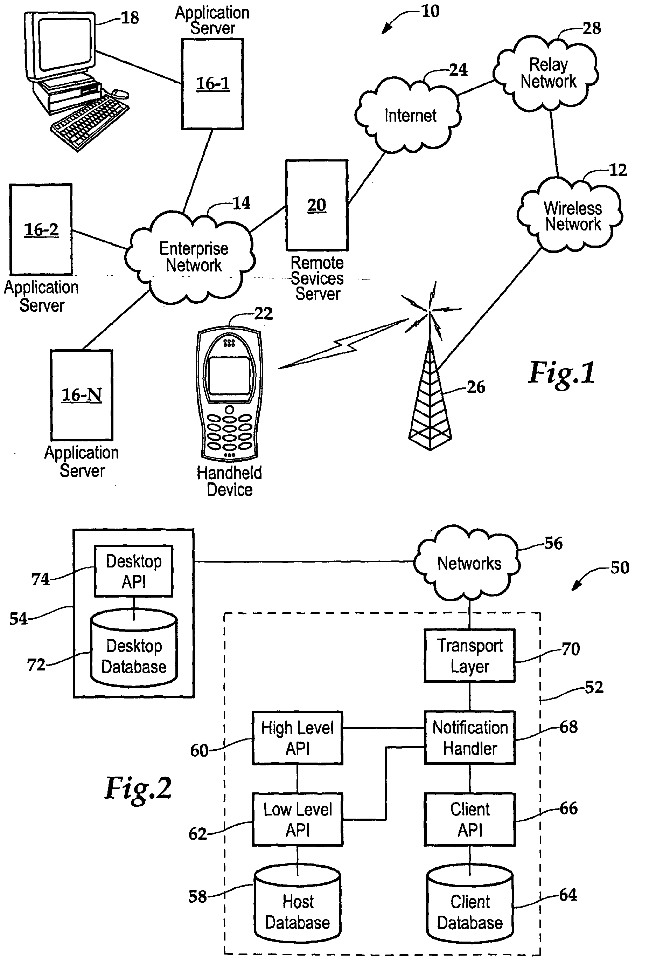

Referring initially to Figure 1, depicted therein is an exemplary network environment 10 including a wireless packet data service network 12 wherein an embodiment of the present patent application may be practiced. An enterprise network 14, which may be a packet-switched network, can include one or more geographic sites and be organized as a local area network (LAN), wide area network (WAN), metropolitan area network (MAN) or the like for serving a plurality of corporate users. A number of application servers 16-1 through 16-N disposed as part of the enterprise network 14 are operable to provide or effectuate a host of internal and external services such as email, video mail, Internet access, corporate data access, messaging, calendaring and scheduling, information management and the like. Accordingly, a diverse array of personal information appliances such as desktop computers, laptop computers, palmtop computers and the like, which are generically and collectively referred to herein and depicted as desktop computer 18, may be operably networked to one or more of the application servers 16-i, where i = 1, 2,...,N, with respect to the services supported in enterprise network 14.

Additionally, a remote services server 20 may be interfaced with enterprise network 14 for enabling a corporate user to access or effectuate any of the services from a remote location using a suitable handheld device 22. A secure communication link with end-to-end encryption may be established that is mediated through an external IP network, i.e., a public packet-switched network such as the Internet 24, as well as the wireless packet data service network 12 operable with handheld device 22 via suitable wireless network infrastructure that includes a base station 26. In one embodiment, a trusted relay network 28 may be disposed between Internet 24 and the infrastructure of wireless packet data service network 12. By way of example, handheld device 22 may be a data-enabled handheld device capable of receiving and sending voice, text messages, web browsing, interfacing with corporate application servers and the like.

For purposes of the present patent application, the wireless packet data service network 12 may be implemented in any known or heretofore unknown mobile communications technologies and network protocols, as long as a packet-switched data service is available therein for transmitting packetized information. For instance, the wireless packet data service network 12 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 12 may comprise an Enhanced Data Rates for GSM Evolution (EDGE) network, an Integrated Digital Enhanced Network (IDEN), a Code Division Multiple Access (CDMA) network, any 3rd Generation (3G) network or the like.

Referring next to figure 2, an exemplary software architecture for enabling continuous synchronization of a handheld device in a wireless communication network is illustrated and generally designated 50. Handheld device 52 is in wireless communication with desktop computer 45 via networks 56 which generically and collectively represent the end-to-end connection created, for example, by base station 26, wireless packet data service network 12, trusted relay network 28, Internet 24, remote services server 20, enterprise network 14 and application server 16 as described with reference to figure 1. Handheld device 52 is preferably a two-way wireless communication device having at least voice and data communication capabilities. Depending on the exact functionality provided, the handheld device 52 may be referred to as a data messaging device, a two-way pager, a wireless e-mail device, a cellular telephone with data messaging capabilities, a wireless Internet appliance or a data communication device, as

### examples.

Handheld device 52 preferably includes a microprocessor which controls the overall operation of handheld device 52. The microprocessor interacts with various subsystems of handheld device 52 including communication subsystems, user interface subsystems, memory subsystems and the like as well as other subsystems known to those skilled in the art. The microprocessor preferably enables execution of software applications on handheld device 52. A predetermined set of applications that control basic operations, including at least data and voice communication applications for example, will normally be installed on handheld device 52 during manufacturing. For example, handheld device 52 preferably includes a native personal information manager (PIM) application having the ability to organize and manage information relating to, for example, calender information, task information, contacts information and the like.

Typically, the native PIM application would have the ability to send and receive data items via a wired or wireless connection to synchronized and updated with the user's corresponding data items stored or associated with desktop computer 54 when prompted by the user to synchronize. The illustrated native PIM application includes a host database 58 for storing the information, a high level API 60 for accessing the information stored in host database 58 and a low level API 62 for managing the information stored in host database 58. This configuration alone, however, does not allow for continuous synchronization with desktop computer 54 but instead, would require the user to initiate the synchronization process.

In the illustrated embodiment, handheld device 52 serves as a host device such that a client application may be added onto the host to supplement, supplant or otherwise perform functionality that the host normally would not be capable of performing. In the present case, the native configuration of handheld device 52 does not allow for continuous synchronization with desktop computer 54 such that changes made in host database 58 are not updated in desktop computer 54 without user intervention. By adding a client synchronization application, however, this functionality is achieved. Specifically, the client synchronization application includes a client database 64 for storing a mirror image or enhanced mirror image of the information stored in the host database. The client synchronization application also includes a client API 66 for accessing and managing client database 64 and a notification handler module 68 that controls the acquisition, processing and duplication of information between host database 58 and client database 64 as explained in greater detail below.

To achieve continuous wireless synchronization, the client synchronization application interfaces with a multilayer transport stack 70 that is operable to provide a generic data transport protocol for any type of data via a reliable, secure and seamless continuous connection to a wireless packet data service network. In one implantation, transport stack 70 includes a bottom layer (Layer 1) that is operable as an interface to the wireless network's packet layer. Layer 1 handles basic service coordination within the exemplary network environment 56. For example, when handheld device 52 roams from one carrier network to another, Layer 1 verifies that the packets are relayed to the appropriate wireless network and that any packets that are pending from the previous network are rerouted to the current network. The top layer (Layer 4) of transport stack 70 exposes various application interfaces such as the client synchronization application to the services supported on handheld device 52. The remaining two layers, Layer 2 and Layer 3, are responsible for datagram segmentation/reassembly and security, compression and routing, respectively.

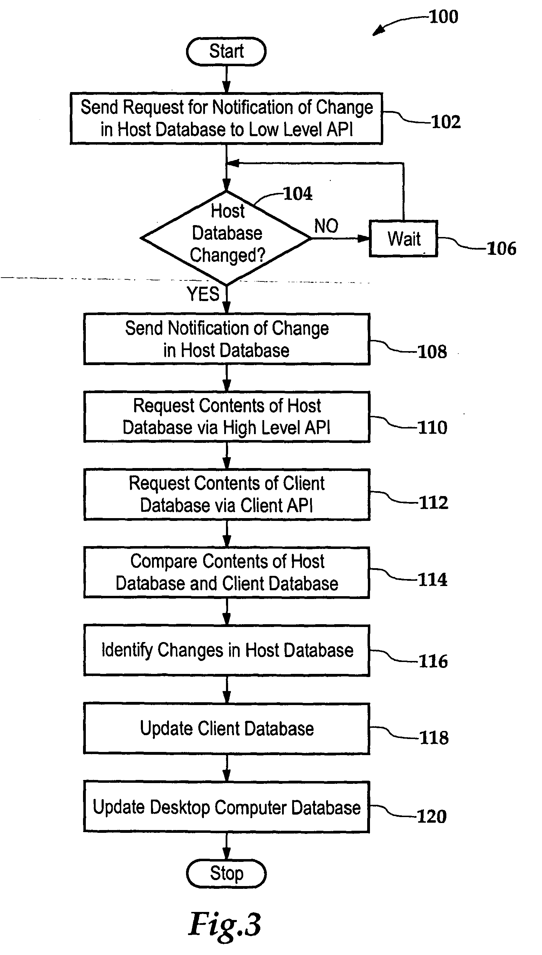

Notification handler module 68 provides an interface between the native PIM application and the client synchronization application and in some embodiments partially or completely disables the native synchronization functionality. Specifically, and with reference to figure 3, the operations controlled by notification handler module 68 are described in process 100. The process begins with notification handler module 68 sending an interrupt type request to low level API 62 for notification of a change in host database 58 (block 102). The request is sent to low level API as high level API 60 is unable to receive and respond to such interrupt type requests. Once the request has been sent, if no change is made to the information stored in host database 58, no action is taken by either notification handler module 68 or low level API 62 with respect to the request (block 106). If a change, such as a deletion, an update or an insertion to an -existing record, the creation of a new record or the deletion of an entire record, is made to the information in host database 58, low level API 62 sends a notification of the change in host database 58 which is received by notification handler module 68 (block 108).

Notification handler module 68 now send a request to high level API 60 for the contents of host database 58 (block 110) and a request to client API 66 for the contents of client database 64 (block 112). It is noted that notification handler module 68 must request the contents of host database 58 from high level API 60 as low level API is unable to receive and respond to such a request. The contents of these two databases 58, 64 are then compared to one another by notification handler module 68 (block 114) such that notification handler module 68 may identify what change has been made in host database 58 (block 116). Once notification handler module 68 determines what change has occurred in host database 58, notification handler module 68 provides this information to client database 64 such that the contents of client database 64 will again mirror the contents of host database 58 (block 118). Once client database 64 has been updated, the continuous connection between handheld device 52 and desktop computer 54 via networks 56 allows desktop database 72 to be updated using desktop API 74 (block 120).

Importantly, in addition to simply updating client database 64 with the changes made to the information in host database 58, when the change made in host database 58 is a new record, in one embodiment, notification handler module 68 adds additions fields to the new record which are stored in association with the new record in client database 64. For example, the additional fields may be useful or required to achieve the continuous synchronization capability over networks 56.

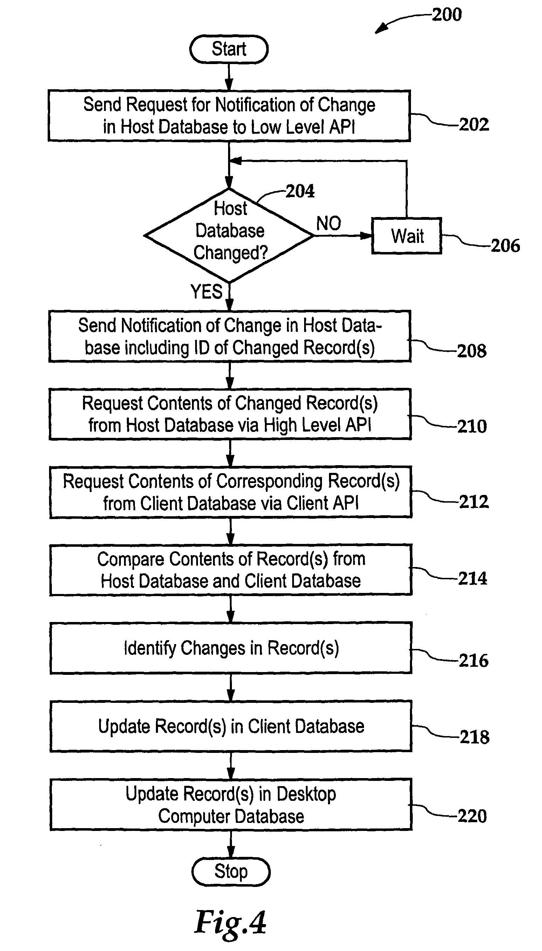

Another implementation of the client synchronization application on a host handheld device will now be described with reference to figure 4 and process 200. The process begins with notification handler module 68 sending an interrupt type request to low level API 62 for notification of a change in host database 58 (block 202). As before, the request is sent to low level API as high level API 60 is unable to receive and respond to such interrupt type requests. Once the request has been sent, if no change is made to the information stored in host database 58, no action is taken by either notification handler module 68 or low level API 62 with respect to the request (block 206). If a change, such as a deletion, an update or an insertion to an existing record, the creation of a new record or the deletion of an entire record, is made to the information in host database 58, low level API 62 sends a notification of the change in host database 58 which includes the record ID of the record in which the change in made. The notification is received by notification handler module 68 (block 208).

Notification handler module 68 now send a request to high level API 60 for the contents of the changed record of host database 58 (block 210) and a request to client API 66 for the contents of any corresponding record in client database 64 (block 212). As before, notification handler module 68 must request the contents of the changed record from high level API 60 as low level API is unable to receive and respond to such a request. The contents of these two records are then compared to one another by notification handler module 68 (block 214) such that notification handler module 68 may identify what change has been made in the record (block 216). Once notification handler module 68 determines what change has occurred, notification handler module 68 provides this information to client database 64 such that the contents of the effected record in client database 64 are updated and client database 64 again mirrors the contents of host database 58 (block 218). Once client database 64 has been updated, the continuous connection between handheld device 52 and desktop computer 54 via networks 56 allows desktop database 72 to be updated using desktop API 74 (block 220).

While this application has described a mobile device with reference to illustrative embodiments, this description is not intended to be construed in a limiting sense. Various modifications and combinations of the illustrative embodiments as well as other embodiments of the mobile device, will be apparent to persons skilled in the art upon reference to the description. It is, therefore, intended that the appended claims encompass any such modifications or embodiments.

## Claims

1. A method for updating a client database (64) within a host handheld device (52) to enable continuous synchronization between the host handheld device (52) and a desktop computer (54) via a wireless communication network (56), the host handheld device (52) having a host database (58), a client database (64) for storing a mirror image or an enhanced mirror image of the contents of the host database, a notification handler (68), a multilayer transport stack (70), a first API (62) and a second API (60) resident thereon, the method comprising:
establishing a wireless connection between the host handheld device (52) and the desktop computer (54) via the wireless communication network (56) and the multilayer transport stack (70), the stack (70) being operable to provide a continuous connection;
sending, via the notification handler (68), a request for notification of a change in the host database (58) to a first API (62);
receiving, via the notification handler (68), the notification of the change in the host database (58) after the change has occurred in the host database (58);
requesting, via the notification handler (68), contents of the host database (58) from a second API (60);
requesting, via the notification handler (68), contents from a client database (64);
comparing, via the notification handler (68), the contents of the host database (58) and the contents of the client database (64);
identifying, via the notification handler (68), the change in the host database (58);
updating, via the notification handler (68), the client database (64) based upon the change in the host database (58); and,
communicating with the desktop computer (54), via the continuous wireless connection, to update a database (72) of the desktop computer (54) based upon the updated client database (64).

2. The method as recited in claim 1, wherein receiving the notification of the change in the host database (58) after the change has occurred in the host database (58) further comprises identifying a record in which the change occurred.

3. The method as recited in claim 2, wherein requesting contents of the host database (58) from a second API (60) further comprises requesting contents of the record in which the change occurred.

4. The method as recited in claim 3, wherein requesting contents from a client database (64) further comprises requesting contents related to the record in which the change occurred in the host database (58).

5. The method as recited in any preceding claim, wherein sending a request for notification of a change in a host database (58) to a first API (62) further comprises sending a request for notification of a change in the host database (58) to a low level API (62) and wherein requesting contents of the host database (58) from a second API (60) further comprises requesting contents of the host database (58) from a high level API (60).

6. The method as recited in any preceding claim, wherein receiving the notification of the change in the host database (58) after the change has occurred in the host database (58) further comprises receiving the notification of a new record in the host database (58).

7. The method as recited in claim 6, wherein updating the client database (64) based upon the change in the host database (58) further comprises adding the new record to the client database (64) and adding additional fields in association with the new record in the client database (64).

8. A network system (50) comprising:
a desktop computer (54) having a database (72);
a wireless communication network (56) communicably linked to the desktop computer (54);
a handheld device (52) communicably linked to the wireless network (56), the handheld device (52) including a host database (58) having first and second API (62, 60) associated therewith, a client database (64) for storing a mirror image or an enhanced mirror image of the contents of the host database (58), a notification handler (68), and a multilayer transport stack (70);
wherein:
the wireless communication network (56) and the multilayer transport stack (70) are arranged to establish a wireless connection between the host handheld device (52) and the desktop computer (54), the stack (70) being operable to provide a continuous connection;
the notification handler (68) is arranged to: send a request for notification of a change in the host database (58) to the first API (62), receive the notification of the change in the host database (58) after the change has occurred in the host database (58), request contents of the host database (58) from the second API (60), request contents from the client database (64), compare the contents of the host database (58) and the contents of the client database (64), identify the change in the host database (58), and send a command to update the client database (64) based upon the change in the host database (58); and,
the handheld device (52) is arranged to communicate with the desktop computer (54) via the wireless communication network (56) to update the desktop computer database (72) based upon the updated client database (64).

9. The network system (50) as recited in claim 8, wherein the notification of the change in the host database (58) after the change has occurred in the host database (58) further comprises identification of a record in which the change occurred.

10. The network system (50) as recited in claim 9, wherein the contents of the host database (58) further comprise contents of the record in which the change occurred.

11. The network system (50) as recited in claim 10, wherein the contents from a client database (64) further comprises contents related to the record in which the change occurred in the host database (58).

12. The network system (50) as recited in any of claims 8 to 11, wherein the notification of the change in the host database (58), after the change has occurred in the host database (58), further comprises a notification of a new record in the host database (58).

13. The network system (50) as recited in any of claims 8 to 12, wherein the command to update the client database (64) based upon the change in the host database (58) further comprises a command to add the new record to the client database (64) and add additional fields in association with the new record in the client database (64).

14. A handheld device (52) comprising:
a host database (58) having first and second API (62, 60) associated therewith;
a client database (64) for storing a mirror image or an enhanced mirror image of the contents of the host database (58);
a multilayer transport stack (70) arranged with a wireless network (56) to establish a wireless connection between the host handheld device (52) and a desktop computer (54), the stack (70) being operable to provide a continuous connection; and,
a notification handler (68), wherein the notification handler (68) is arranged to send a request for notification of a change in the host database (58) to the first API (62), receive the notification of the change in the host database (58) after the change has occurred in the host database (58), request contents of the host database (58) from the second API (60), request contents from the client database (64), compare the contents of the host database (58) and the contents of the client database (64), identify the change in the host database (58), send a command to update the client database (64) based upon the change in the host database (58), and communicate with the desktop computer (54) via the wireless communication network (56) to update a database (72) of the desktop computer (54) based upon the updated client database (64).

15. The handheld device (52) as recited in claim 14, wherein the notification of the change in the host database (58), after the change has occurred in the host database (58), further comprises identification of a record in which the change occurred.

16. The handheld device (52) as recited in claim 15, wherein the contents of the host database (58) further comprise contents of the record in which the change occurred.

17. The handheld device (52) as recited in claim 16, wherein the contents from a client database (64) further comprises contents related to the record in which the change occurred in the host database (58).

18. The handheld device (52) as recited in any of claims 14 to 17, wherein the notification of the change in the host database (58) after the change has occurred in the host database (58) further comprises a notification of a new record in the host database (58).

19. The handheld device (52) as recited in claim 18, wherein the command to update the client database (64) based upon the change in the host database (58) further comprises a command to add the new record to the client database (64) and add additional fields in association with the new record in the client database (64).

## Patentansprüche

1. Verfahren für die Aktualisierung einer Client-Datenbank (64) in einer tragbaren Host-Vorrichtung (52), um eine kontinuierliche Synchronisierung zwischen der tragbaren Host-Vorrichtung (52) und einem Desktopcomputer (54) über ein drahtloses Kommunikationsnetzwerk (56) zu ermöglichen, wobei die tragbare Host-Vorrichtung (52) eine Host-Datenbank (58), eine Client-Datenbank (64) zum Speichern eines Spiegelbilds oder eines verbesserten Spiegelbilds der Inhalte der Host-Datenbank, eine Benachrichtigungshandhabungsvorrichtung (68), einen Multi-Schicht-Transportstapel (70), eine erste API (62) und eine zweite API (60), die sich darauf befinden, aufweist, wobei das Verfahren aufweist:
Herstellen einer drahtlosen Verbindung zwischen der tragbaren Host-Vorrichtung (52) und dem Desktopcomputer (54) über das drahtlose Kommunikationsnetzwerk (56) und den Multi-Schicht-Transportstapel (70), wobei der Stapel (70) betriebsfähig ist, eine kontinuierliche Verbindung zu liefern;
Senden, über die Benachrichtigungshandhabungsvorrichtung (68), einer Anforderung für eine Benachrichtigung über eine Änderung in der Host-Datenbank (58) an eine erste API (62);
Empfangen, über die Benachrichtigungshandhabungsvorrichtung (68), der Benachrichtigung über die Änderung in der Host-Datenbank (58), nachdem die Änderung in der Host-Datenbank (58) stattgefunden hat;
Anfordern, über die Benachrichtigungshandhabungsvorrichtung (68), von Inhalten der Host-Datenbank (58) von einer zweiten API (60);
Anfordern, über die Benachrichtigungshandhabungsvorrichtung (68), von Inhalten von einer Client-Datenbank (64);
Vergleichen, über die Benachrichtigungshandhabungsvorrichtung (68), der Inhalte der Host-Datenbank (58) und der Inhalte der Client-Datenbank (64); Identifizieren, über die Benachrichtigungshandhabungsvorrichtung (68), der Änderung in der Host-Datenbank (58);
Aktualisieren, über die Benachrichtigungshandhabungsvorrichtung (68), der Client-Datenbank (64) basierend auf der Änderung in der Host-Datenbank (58); und
Kommunizieren mit dem Desktopcomputer (54) über die kontinuierliche drahtlose Verbindung, um eine Datenbank (72) des Desktopcomputers (54) basierend auf der aktualisierten Client-Datenbank (64) zu aktualisieren.

2. Verfahren gemäß Anspruch 1, wobei das Empfangen der Benachrichtigung über die Änderung in der Host-Datenbank (58), nachdem die Änderung in der Host-Datenbank (58) stattgefunden hat, weiter aufweist ein Identifizieren eines Datensatzes, in dem die Änderung stattgefunden hat.

3. Verfahren gemäß Anspruch 2, wobei das Anfordern von Inhalten der Host-Datenbank (58) von einer zweiten API (60) weiter ein Anfordern von Inhalten des Datensatzes aufweist, in dem die Änderung stattgefunden hat.

4. Verfahren gemäß Anspruch 3, wobei das Anfordern von Inhalten von einer Client-Datenbank (64) weiter ein Anfordern von Inhalten aufweist, die den Datensatz betreffen, in dem die Änderung in der Host-Datenbank (58) stattgefunden hat.

5. Verfahren gemäß einem vorhergehenden Anspruch, wobei ein Senden einer Anforderung für eine Benachrichtigung über eine Änderung in einer Host-Datenbank (58) an eine erste API (62) weiter aufweist ein Senden einer Anforderung für eine Benachrichtigung über eine Änderung in der Host-Datenbank (58) an eine API (62) einer unteren Schicht und wobei ein Anfordern von Inhalten der Host-Datenbank (58) von einer zweiten API (60) weiter aufweist ein Anfordern von Inhalten der Host-Datenbank (58) von einer API (60) einer oberen Schicht.

6. Verfahren gemäß einem vorhergehenden Anspruch, wobei ein Empfangen der Benachrichtigung über die Änderung in der Host-Datenbank (58), nachdem die Änderung in der Host-Datenbank (58) stattgefunden hat, weiter aufweist ein Empfangen der Benachrichtigung eines neuen Datensatzes in der Host-Datenbank (58).

7. Verfahren gemäß Anspruch 6, wobei ein Aktualisieren der Client-Datenbank (64) basierend auf der Änderung in der Host-Datenbank (58) weiter ein Hinzufügen des neuen Datensatzes zu der Client-Datenbank (64) und ein Hinzufügen von zusätzlichen Feldern in Verbindung mit dem neuen Datensatz in der Client-Datenbank (64) aufweist.

8. Netzwerksystem (50), das aufweist:
einen Desktopcomputer (54) mit einer Datenbank (72);
ein drahtloses Kommunikationsnetzwerk (56), das kommunizierbar mit dem Desktopcomputer (54) verbunden ist;
eine tragbare Vorrichtung (52), die kommunizierbar mit dem drahtlosen Netzwerk (56) verbunden ist, wobei die tragbare Vorrichtung (52) eine Host-Datenbank (58) mit dazugehöriger erster und zweiter API (62, 60), eine Client-Datenbank (64) zum Speichern eines Spiegelbilds oder eines verbesserten Spiegelbilds der Inhalte der Host-Datenbank (58), eine Benachrichtigungshandhabungsvorrichtung (68) und einen Multi-Schicht-Transportstapel (70) umfasst;
wobei:
das drahtlose Kommunikationsnetzwerk (56) und der Multi-Schicht-Transportstapel (70) ausgebildet sind, eine drahtlose Verbindung zwischen der tragbaren Host-Vorrichtung (52) und dem Desktopcomputer (54) aufzubauen, wobei der Stapel (70) betriebsfähig ist, eine kontinuierliche Verbindung vorzusehen;
die Benachrichtigungshandhabungsvorrichtung (68) ausgebildet ist: eine Anforderung für eine Benachrichtigung über eine Änderung in der Host-Datenbank (58) an die erste API (62) zu senden, die Benachrichtigung über eine Änderung in der Host-Datenbank (58) zu empfangen, nachdem die Änderung in der Host-Datenbank (58) stattgefunden hat, Inhalte der Host-Datenbank (58) von der zweiten API (62) anzufordern, Inhalte von der Client-Datenbank (64) anzufordern, die Inhalte der Host-Datenbank (58) und die Inhalte der Client-Datenbank (64) zu vergleichen, die Änderung in der Host-Datenbank (58) zu identifizieren und einen Befehl zu senden, die Client-Datenbank (64) zu aktualisieren basierend auf der Änderung in der Host-Datenbank (58); und
die tragbare Vorrichtung (52) ausgebildet ist, mit dem Desktopcomputer (54) über das drahtlose Kommunikationsnetzwerk (56) zu kommunizieren, um die Datenbank (72) des Desktopcomputers basierend auf der aktualisierten Client-Datenbank (64) zu aktualisieren.

9. Netzwerksystem (50) gemäß Anspruch 8, wobei die Benachrichtigung über die Änderung in der Host-Datenbank (58), nachdem die Änderung in der Host-Datenbank (58) stattgefunden hat, weiter aufweist eine Identifizierung eines Datensatzes, in dem die Änderung stattgefunden hat.

10. Netzwerksystem (50) gemäß Anspruch 9, wobei die Inhalte der Host-Datenbank (58) weiter Inhalte des Datensatzes aufweisen, in dem die Änderung stattgefunden hat.

11. Netzwerksystem (50) gemäß Anspruch 10, wobei die Inhalte von einer Client-Datenbank (64) weiter Inhalte aufweisen, die den Datensatz betreffen, in dem die Änderung in der Host-Datenbank (58) stattgefunden hat.

12. Netzwerksystem (50) gemäß einem der Ansprüche 8 bis 11, wobei die Benachrichtigung über die Änderung in der Host-Datenbank (58), nachdem die Änderung in der Host-Datenbank (58) stattgefunden hat, weiter aufweist eine Benachrichtigung über einen neuen Datensatz in der Host-Datenbank (58).

13. Netzwerksystem (50) gemäß einem der Ansprüche 8 bis 12, wobei der Befehl, die Client-Datenbank (64) basierend auf der Änderung in der Host-Datenbank (58) zu aktualisieren, weiter einen Befehl aufweist, den neuen Datensatz zu der Client-Datenbank (64) hinzuzufügen und zusätzliche Felder in Verbindung mit dem neuen Datensatz in der Client-Datenbank (64) hinzuzufügen.

14. Tragbare Vorrichtung (52), die aufweist:
eine Host-Datenbank (58) mit dazugehöriger erster und zweiter API (62, 60);
eine Client-Datenbank (64) zum Speichern eines Spiegelbilds oder eines verbesserten Spiegelbilds der Inhalte der Host-Datenbank (58);
einen Multi-Schicht-Transportstapel (70), der mit einem drahtlosen Netzwerk (56) ausgebildet ist, eine drahtlose Verbindung zwischen der tragbaren Host-Vorrichtung (52) und einem Desktopcomputer (54) aufzubauen, wobei der Stapel (70) betriebsfähig ist, eine kontinuierliche Verbindung vorzusehen; und
eine Benachrichtigungshandhabungsvorrichtung (68), wobei die Benachrichtigungshandhabungsvorrichtung (68) ausgebildet ist, eine Anforderung für eine Benachrichtigung über eine Änderung in der Host-Datenbank (58) an die erste API (62) zu senden, die Benachrichtigung über die Änderung in der Host-Datenbank (58) zu empfangen, nachdem die Änderung in der Host-Datenbank (58) stattgefunden hat, Inhalte der Host-Datenbank (58) von der zweiten API (62) anzufordern, Inhalte von der Client-Datenbank (64) anzufordern, die Inhalte der Host-Datenbank (58) und die Inhalte der Client-Datenbank (64) zu vergleichen, die Änderung in der Host-Datenbank (58) zu identifizieren, einen Befehl zu senden, die Client-Datenbank (64) zu aktualisieren basierend auf der Änderung in der Host-Datenbank (58), und mit dem Desktopcomputer (54) über das drahtlose Kommunikationsnetzwerk (56) zu kommunizieren, um eine Datenbank (72) des Desktopcomputers basierend auf der aktualisierten Client-Datenbank (64) zu aktualisieren.

15. Tragbare Vorrichtung (52) gemäß Anspruch 14, wobei die Benachrichtigung über die Änderung in der Host-Datenbank (58), nachdem die Änderung in der Host-Datenbank (58) stattgefunden hat, weiter eine Identifizierung eines Datensatzes aufweist, in dem die Änderung stattgefunden hat.

16. Tragbare Vorrichtung (52) gemäß Anspruch 15, wobei die Inhalte der Datenbank (58) weiter Inhalte des Datensatzes aufweisen, in dem die Änderung stattgefunden hat.

17. Tragbare Vorrichtung (52) gemäß Anspruch 16, wobei die Inhalte von einer Client-Datenbank (64) weiter Inhalte aufweisen, die den Datensatz betreffen, in dem die Änderung in der Host-Datenbank (58) stattgefunden hat.

18. Tragbare Vorrichtung (52) gemäß einem der Ansprüche 14 bis 17, wobei die Benachrichtigung über die Änderung in der Host-Datenbank (58), nachdem die Änderung in der Host-Datenbank (58) stattgefunden hat, weiter eine Benachrichtigung über einen neuen Datensatz in der Host-Datenbank (58) aufweist.

19. Tragbare Vorrichtung (52) gemäß Anspruch 18, wobei der Befehl, die Client-Datenbank (64) zu aktualisieren basierend auf der Änderung in der Host-Datenbank (58) weiter einen Befehl aufweist, den neuen Datensatz zu der Client-Datenbank (64) hinzuzufügen und zusätzliche Felder in Verbindung mit dem neuen Datensatz in der Client-Datenbank (64) hinzuzufügen.

## Revendications

1. Procédé de mise à jour d'une base de données cliente (64) au sein d'un dispositif hôte portable (52) afin de permettre une synchronisation continue entre le dispositif hôte portable (52) et un ordinateur de bureau (54) via un réseau de communication sans fil (56), le dispositif hôte portable (52) possédant une base de données hôte (58), une base de données cliente (64) destinée à stocker une image en miroir ou une image en miroir améliorée du contenu de la base de données hôte, un gestionnaire de notifications (68), une pile de transport à couches multiples (70), une première API (62) et une seconde API (60) qui y résident, le procédé comprenant les étapes consistant à :
établir une connexion sans fil entre le dispositif hôte portable (52) et l'ordinateur de bureau (54), via le réseau de communication sans fil (56) et la pile de transport à couches multiples (70), la pile (70) étant en mesure de fournir une connexion continue ;
envoyer par le gestionnaire de notifications (68) à une première API (62) une demande de notification d'un changement dans la base de données hôte (58) ;
recevoir par le gestionnaire de notifications (68) la notification du changement dans la base de données hôte (58) après que le changement s'est produit dans la base de données hôte (58) ;
demander par le gestionnaire de notifications (68) à une seconde API (60) le contenu de la base de données hôte (58) ;
demander par le gestionnaire de notifications (68) le contenu d'une base de données cliente (64) ;
comparer par le gestionnaire de notifications (68) le contenu de la base de données hôte (58) et le contenu de la base de données cliente (64) ;
identifier par le gestionnaire de notifications (68) le changement dans la base de données hôte (58) ;
mettre à jour par le gestionnaire de notifications (68) la base de données cliente (64) sur la base du changement dans la base de données hôte (58) ; et
communiquer avec l'ordinateur de bureau (54), via la connexion sans fil continue, afin de mettre à jour une base de données (72) de l'ordinateur de bureau (54), sur la base de la base de données cliente (64) mise à jour.

2. Procédé selon la revendication 1, dans lequel l'étape de réception de la notification du changement dans la base de données hôte (58) après que le changement s'est produit dans la base de données hôte (58) comprend en outre l'étape consistant à identifier un enregistrement dans lequel s'est produit le changement.

3. Procédé selon la revendication 2, dans lequel l'étape de demande à une seconde API (60) du contenu de la base de données hôte (58) comprend en outre l'étape consistant à demander le contenu de l'enregistrement dans lequel s'est produit le changement.

4. Procédé selon la revendication 3, dans lequel l'étape de demande du contenu d'une base de données cliente (64) comprend en outre l'étape consistant à demander un contenu lié à l'enregistrement dans lequel s'est produit le changement dans la base de données hôte (58).

5. Procédé selon l'une quelconque des revendications précédentes, dans lequel l'étape d'envoi à une première API (62) d'une demande de notification d'un changement dans la base de données hôte (58) comprend en outre l'étape consistant à envoyer à une API de bas niveau (62) une demande de notification d'un changement dans la base de données hôte (58), et dans lequel l'étape de demande à une seconde API (60) du contenu de la base de données hôte (58) comprend en outre l'étape consistant à demander à une API de haut niveau (60) le contenu de la base de données hôte (58).

6. Procédé selon l'une quelconque des revendications précédentes, dans lequel l'étape de réception de la notification du changement dans la base de données hôte (58) après que le changement s'est produit dans la base de données hôte (58) comprend en outre l'étape consistant à recevoir la notification d'un nouvel enregistrement dans la base de données hôte (58).

7. Procédé selon la revendication 6, dans lequel l'étape de mise à jour de la base de données cliente (64) sur la base du changement dans la base de données hôte (58) comprend en outre l'étape consistant à ajouter le nouvel enregistrement à la base de données cliente (64) et à ajouter des champs supplémentaires en association avec le nouvel enregistrement dans la base de données cliente (64).

8. Système de réseau (50) comprenant :
un ordinateur de bureau (54) possédant une base de données (72) ;
un réseau de communication sans fil (56) relié pour communiquer à l'ordinateur de bureau (54) ;
un dispositif portable (52) relié pour communiquer au réseau sans fil (56), le dispositif portable (52) comprenant une base de données hôte (58) ayant une première et une seconde API (62, 60) qui lui sont associées, une base de données cliente (64) destinée à stocker une image en miroir ou une image en miroir améliorée du contenu de la base de données hôte (58), un gestionnaire de notifications (68)et une pile de transport à couches multiples (70) ;
dans lequel :
le réseau de communication sans fil (56) et la pile de transport à couches multiples (70) sont conçus pour établir une connexion sans fil entre le dispositif hôte portable (52) et l'ordinateur de bureau (54), la pile (70) étant en mesure de fournir une connexion continue ;
le gestionnaire de notifications (68) est conçu pour : envoyer à la première API (62) une demande de notification d'un changement dans la base de données hôte (58), recevoir la notification du changement dans la base de données hôte (58) après que le changement s'est produit dans la base de données hôte (58), demander à la seconde API (60) le contenu de la base de données hôte (58), demander le contenu de la base de données cliente (64), comparer le contenu de la base de données hôte (58) et le contenu de la base de données cliente (64), identifier le changement dans la base de données hôte (58) et envoyer une instruction de mise à jour de la base de données cliente (64) sur la base du changement dans la base de données hôte (58) ; et
le dispositif portable (52) est conçu pour communiquer avec l'ordinateur de bureau (54) via le réseau de communication sans fil (56) afin de mettre à jour la base de données (72) de l'ordinateur de bureau, sur la base de la base de données cliente (64) mise à jour.

9. Système de réseau (50) selon la revendication 8, dans lequel la notification du changement dans la base de données hôte (58) après que le changement s'est produit dans la base de données hôte (58) comprend en outre l'identification d'un enregistrement dans lequel s'est produit le changement.

10. Système de réseau (50) selon la revendication 9, dans lequel le contenu de la base de données hôte (58) comprend en outre le contenu de l'enregistrement dans lequel s'est produit le changement.

11. Système de réseau (50) selon la revendication 10, dans lequel le contenu de la base de données cliente (64) comprend en outre du contenu lié à l'enregistrement dans lequel s'est produit le changement dans la base de données hôte (58).

12. Système de réseau (50) selon l'une quelconque des revendications 8 à 11, dans lequel la notification du changement dans la base de données hôte (58) après que le changement s'est produit dans la base de données hôte (58) comprend en outre une notification d'un nouvel enregistrement dans la base de données hôte (58).

13. Système de réseau (50) selon l'une quelconque des revendications 8 à 12, dans lequel l'instruction de mise à jour de la base de données cliente (64) sur la base du changement dans la base de données hôte (58) comprend en outre une instruction d'ajout du nouvel enregistrement à la base de données cliente (64) et d'ajout des champs supplémentaires en association avec le nouvel enregistrement dans la base de données cliente (64).

14. Dispositif portable (52) comprenant :
une base de données hôte (58) ayant une première et une seconde API (62, 60) qui lui sont associées ;
une base de données cliente (64) destinée à stocker une image en miroir ou une image en miroir améliorée du contenu de la base de données hôte (58) ;
une pile de transport à couches multiples (70) agencée avec un réseau sans fil (56) afin d'établir une connexion sans fil entre le dispositif hôte portable (52) et un ordinateur de bureau (54), la pile (70) étant en mesure de fournir une connexion continue ; et
un gestionnaire de notifications (68), le gestionnaire de notifications (68) étant conçu pour envoyer à la première API (62) une demande de notification d'un changement dans la base de données hôte (58), recevoir la notification du changement dans la base de données hôte (58) après que le changement s'est produit dans la base de données hôte (58), demander à la seconde API (60) le contenu de la base de données hôte (58), demander le contenu de la base de données cliente (64), comparer le contenu de la base de données hôte (58) et le contenu de la base de données cliente (64), identifier le changement dans la base de données hôte (58), envoyer une instruction de mise à jour de la base de données cliente (64) sur la base du changement dans la base de données hôte (58) et communiquer avec l'ordinateur de bureau (54) via le réseau de communication sans fil (56) afin de mettre à jour une base de données (72) de l'ordinateur de bureau (54), sur la base de la base de données cliente (64) mise à jour.

15. Dispositif portable (52) selon la revendication 14, dans lequel la notification du changement dans la base de données hôte (58) après que le changement s'est produit dans la base de données hôte (58) comprend en outre l'identification d'un enregistrement dans lequel s'est produit le changement.

16. Dispositif portable (52) selon la revendication 15, dans lequel le contenu de la base de données hôte (58) comprend en outre le contenu de l'enregistrement dans lequel s'est produit le changement.

17. Dispositif portable (52) selon la revendication 16, dans lequel le contenu de la base de données cliente (64) comprend en outre du contenu lié à l'enregistrement dans lequel s'est produit le changement dans la base de données hôte (58).

18. Dispositif portable (52) selon l'une quelconque des revendications 14 à 17, dans lequel la notification du changement dans la base de données hôte (58) après que le changement s'est produit dans la base de données hôte (58) comprend en outre une notification d'un nouvel enregistrement dans la base de données hôte (58).

19. Dispositif portable (52) selon la revendication 18, dans lequel l'instruction de mise à jour de la base de données cliente (64) sur la base du changement dans la base de données hôte (58) comprend en outre une instruction d'ajout du nouvel enregistrement à la base de données cliente (64) et d'ajout des champs supplémentaires en association avec le nouvel enregistrement dans la base de données cliente (64).
